# EUROPEAN PATENT SPECIFICATION

(11) **EP 3 784 530 B1**
(45) Date of publication and mention of the grant of the patent: **08.02.2023**
(21) Application number: 18916090.6
(22) Date of filing: 07.12.2018
(51) Int. Cl.: B60R 19/52, B60K 11/08

(54) **A SUPPORT ROD SELF-LOCKING STRUCTURE AND A GRILLE ASSEMBLY COMPRISING THE SELF-LOCKING STRUCTURE**
SELBSTSPERRENDE STRUKTUR EINER STÜTZSTANGE UND GITTERANORDNUNG MIT DER SELBSTSPERRENDEN STRUKTUR
STRUCTURE D'AUTO-VERROUILLAGE DE TIGE DE SUPPORT ET ENSEMBLE GRILLE COMPRENANT LA STRUCTURE D'AUTO-VERROUILLAGE

(30) Priority: 23.04.2018 CN 201820581780 U
(43) Date of publication of application: 03.03.2021
(73) Proprietor: Yanfeng Plastic Omnium Automotive Exterior Systems Co., Ltd., Shanghai 201805 (CN); Compagnie Plastic Omnium, 69007 Lyon (FR)
(72) Inventor: XU, Jie, Shanghai 201805 (CN); GUI, Xiaogang, Shanghai 201805 (CN)
(74) Representative: LLR
(86) International application number: PCT/CN2018/119711
(87) International publication number: WO 2019/205648

(56) References cited:
- EP-A1- 3 227 134
- CN-A- 104 582 989
- CN-U- 202 006 776
- CN-U- 205 905 935
- CN-U- 206 086 358
- CN-U- 206 155 375
- CN-U- 208 085 652
- DE-A1-102014 114 639
- DE-A1-102017 105 568
- DE-B3-102017 108 957
- FR-A1- 3 064 542
- JP-A- 2007 283 993
- JP-A- 2017 087 925
- US-A1- 2017 254 472

## Description

### Field of the Invention

The invention relates to automobile grilles, and more particularly, a support rod self-locking structure and a grille assembly comprising the self-locking structure.

### Background of the Invention

With the development of automobiles, aerodynamic requirements are becoming higher and higher. An active grille shutter ("AGS") not only helps with temperature control, but also can reduce wind drag. Therefore, the needs for rotary parts such as an AGS have also emerged.

In the prior art, an AGS is formed by multiple flaps arranged in rows. Support rods are needed between the flaps to fix their position. EP3227134A1 describes such support rods of flaps. However, in existing solutions, when assembling the support rods with the flaps, the support rods or the flaps have to be deformed for forced mounting. As a result, they can easily be deformed or damaged. Moreover, both mounting and dismounting are difficult.

### Summary of the Invention

In order to solve the problems in the prior art such as the susceptibility to being damaged, the invention aims to provide a grille assembly comprising a self-locking structure for the support rod.

The invention provides a grille assembly comprising two grille bodies that are spaced apart from each other, with multiple flaps arranged between them. The flaps are connected with a support rod by pin-hole match. The support rod is connected to the grille bodies via a self-locking structure. Each grille body is provided with a lug extending outwardly, the lug being provided with a locking slot and a spring strip, the spring strip extending from its base to a free end which, in a free state, is located at the entrance of the locking slot in a stressed state, leaves open the entrance of the locking slot. The support rod comprises a support rod body, an end plate and an engagement portion being provided at each end of the support rod body, the end plate being connected to the end of the support rod body via the engagement portion which enters the locking slot by pressing the free end of the spring strip.

Once the engagement portion slides into the locking slot of the lug and the spring strip returns to its free state, i.e. closes the entrance of the locking slot, the support rod cannot move out of the locking slot without external force. Thus, the structure allows the self-locking of the support rod.

Optionally, the lug comprises a through-hole comprising a receiving slot that communicates with the locking slot, the spring strip extending inside the receiving slot towards the locking slot. The receiving slot is dimensioned so that the end plate can pass through it while the spring strip is deformed under pressure to leave its rest position. This configuration is advantageous since it is space-saving.

The thickness of the engagement portion is less than thickness of the support rod body and less than the width of the end plates. In other words, the engagement portion forms a neck connecting the support rod body and the end plate.

The thickness of the engagement portions is less than the width of the locking slots.

Preferably, the course length of the engagement portion corresponds to the course length of the pin-hole match of the support rod to the flaps. Thus, when the engagement portion reaches its final position in the locking slot, the pin-hole match of the support rod and the flaps is also achieved. In other words, the support rod is mounted to the grille bodies and the flaps in only one step.

The support rod self-locking structure of the invention can achieve the self-locking of a support rod, without having to distorting the flaps and the support rod by force. The flaps or the support rod will not be damaged even with multiple times of mounting and dismounting. Moreover, both mounting and dismounting are very convenient.

The grille assembly is thus easy for mounting and dismounting. Since the flaps and the support will not be subject to extra forces, the assembly is also more durable.

### Description of the Drawings

Figure 1 is a schematic view of a grille assembly comprising a support rod self-locking structure according to the invention;
Figure 2 is a plane view of the lug of a support rod self-locking structure according to the invention;
Figure 3 is a schematic view, from another angle, of a support rod self-locking structure according to the invention;
Figure 4 is an enlarged view of a part of Figure 3.

### Detailed Description of the Invention

A preferred embodiment of the invention is provided below and described in detail in reference to the accompanying drawings.

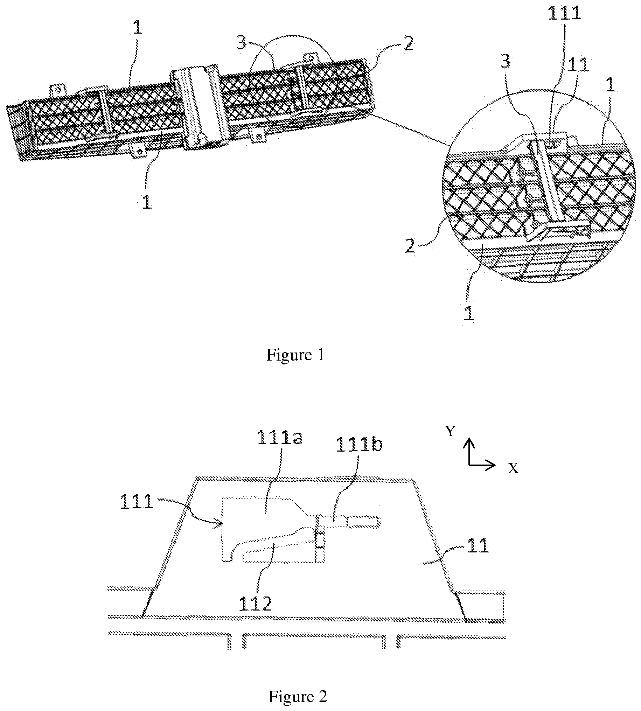

As shown in Fig. 1, an automobile grille assembly comprises upper and lower grille bodies 1 that are spaced apart from each other. Multiple flaps 2 are arranged between the grille bodies 1. The flaps 2 are connected with support rods 3 by pin-hole match. As the specific configuration, relative position, and connection of the grille bodies 1, flaps 2, and the support rods 3 are similar to the prior art, they are not described herein. Differently from the prior art, the grille assembly comprises a support rod self-locking structure according to the invention.

As shown in Fig. 1, each grille body 1 is provided with a lug 11 extending outwardly. Thus two lugs 11 face each other in the vertical direction. The middle part of the lug 11 is hollow so as to form a through-hole 111. The two ends of the support rods 3 engage respectively with the through-holes 111.

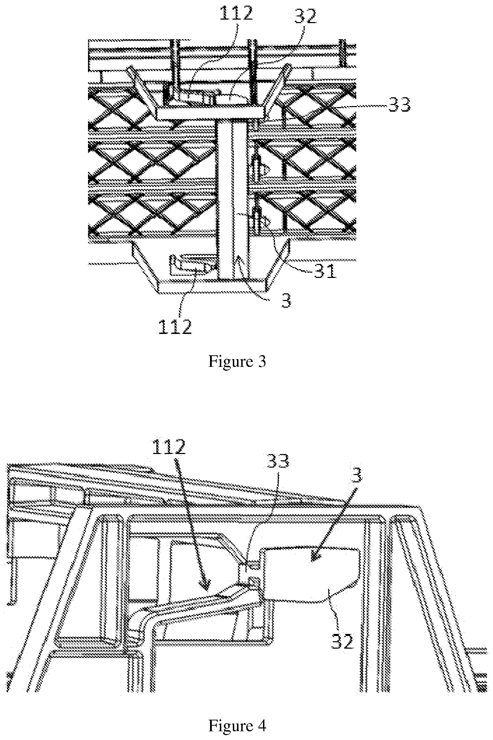

As shown in Fig. 2, a through-hole 111 is divided into a receiving slot 111a and a locking slot 111b that communicate with each other. In reference to Fig. 3, the lug 11 is provided with a spring strip 112 extending towards the receiving slot 111a and housed inside the receiving slot 111a. The base of the spring strip 112 is fixed. Its free end away from the base is located at and closes the entrance of the locking slot 111b when in a free state. Moreover, the free end can deform in the vertical direction of the figure so as to leave open the entrance of the locking slot.

As shown in Fig. 3, the support rod 3 comprises a support rod body 31 and end plates respectively connected to the two ends of the support rod body 31. As shown in Fig. 4, engagement portions 33 are provided between the support rod body 31 and the end plates 32. It should be understood that the thickness of the engagement portions 33 is less than the width of the locking slots 111b which is greater than the thickness of the support rod body 31 and the width of the end plates 32, so that the engagement portions 33 can successfully slide into the locking slots 111b and slide in the left-right direction of Fig. 3, but neither the support rod body 31 nor the end plates 32 can enter the locking slot. Thus, the sliding of the support rod in the vertical direction of Fig. 3 can be restricted by the engagement portions 33.. The thickness of the engagement portion 33 and the support rod body refers to their dimension in the direction Y as shown in Fig. 2. Similarly, the width of the end plates 32 and the locking slot refers to their dimension in the direction Y as shown in Fig. 2.

Referring back to Fig. 2, the free end of the spring strip 112, when in a free state, is located at the entrance of the locking slot 111b. When the support rod 3 is fitted through snapping, the engagement portion 33 presses down the free end of the spring strip 112 so as to make it leave open the entrance of the locking slot 111b, so that the engagement portion 33 can successfully enter the locking slot 111b and slide in the rightward direction of Fig. 2. During the sliding, the pins provided on the support rod 3 will enter the holes provided on the flaps so as to connect the support rod with the flaps at the same time. Once the engagement portion 33 has completely entered the locking slot 111b, as shown in Fig. 4, the free end of the spring strip 112 returns to the position of blocking the entrance of the locking slot 111b by its own elasticity. Thus the engagement portion 33 cannot slide out of the locking slot in the leftward direction of Fig. 2, thus achieving the self-locking. At the same time, since the course length of the engagement portion corresponds to the course length of the pin-hole match of the support rod to the flaps, the connection of the support rod and the flaps is also completed during the same mounting step. Whenever it is necessary to dismount a support rod 3, the self-locking can be disarmed by simply pressing down the free end of the spring strip 112 by external force and making the engagement portion 33 slide out to the left direction of Fig. 2. Obviously, with the support rod self-locking structure according to the invention, the flaps and the support rods will not be distorted by force, or damaged even after multiple times of dismounting and mounting. Moreover, both mounting and dismounting are very convenient.

What has been described above is merely a preferred embodiment of the invention, and is not meant to limit the scope of the invention. The embodiment of the invention described above can be subject to various modifications. All simple, equivalent modifications and embellishments made based on the contents of the specification of the invention fall within the scope of protection of the claims of the invention. What has not been described in detail in the invention is conventional technology.
invention described above can be subject to various modifications in accordance with the scope of the claims.

## Claims

1. An automobile grille assembly comprising two grille bodies (1) that are spaced apart from each other, with multiple flaps (2) arranged between them, the flaps (2) being connected with a support rod (3) by pin-hole match, the grille assembly being **characterized in that**
- each grille body (1) is provided with a lug (11) extending outwardly, the lug (11) being provided with a locking slot (111b) and a spring strip (112), the spring strip (112) extending from its base to a free end which, in a free state, is located at the entrance of the locking slot (111b) and in a stressed state, leaves open the entrance of the locking slot (111b); and
- the support rod (3) comprises a support rod body (31), an end plate (32) and an engagement portion (33) being provided at each end of the support rod body (31), the end plate (32) being connected to the end of the support rod body (31) via the engagement portion (33) which enters the locking slot (111b) by pressing the free end of the spring strip (112).

2. The grille assembly according to claim 1, wherein the course length of the engagement portion corresponds to the course length of the pin-hole match of the support rod to the flaps.

3. The grille assembly according to claim 1 or 2, wherein the lug (11) comprises a through-hole (111) comprising a receiving slot (111a) communicating with the locking slot (111b), the spring strip (112) extending inside the receiving slot (111a) towards the locking slot (111b).

4. The grille assembly according to any one of the preceding claims, wherein the thickness of the engagement portion (33) is less than the thickness of the support rod body (31) and less than the width of the end plates (32).

5. The grille assembly according to any one of the preceding claims, wherein the thickness of the engagement portion (33) is less than the width of the locking slot (111b) which is greater than the thickness of the support rod body (31) and less than the width of the end plates (32).

## Patentansprüche

1. Gitteranordnung für Kraftfahrzeuge aufweisend zwei voneinander beanstandeten Gitterkörpern (1), zwischen welchen mehrere Klappen (2) angeordnet sind, wobei die Klappen (2) mit einer Stützstange (3) durch Stiftlochpassung verbunden sind, wobei die Gitteranordnung **dadurch gekennzeichnet ist, dass**
- jeder Gitterkörper (1) mit einer sich nach außen erstreckender Lasche (11) versehen ist,
wobei die Lasche (11) ein Verriegelungsschlitz (111b) und ein Federstreifen (112) umfasst,
wobei sich der Federstreifen (112) von seiner Basis zu einem freien Ende erstreckt, welches sich in einem freien Zustand am Eingang des Verriegelungsschlitzes (111b) befindet; und
- die Stützstange (3) einen Stützstangenkörper (31), eine Endplatte (32) und einen Eingriffsabschnitt (33) umfasst,
wobei der Eingriffsabschnitt (33) an jedem Ende des Stützstangekörpers (31) vorgesehen ist,
und wobei die Endplatte (32) mit dem Ende des Stützstangekörpers (31) über den Eingriffsabschnitt (33) verbunden ist, welcher in den Verriegelungsschlitz (111b) eintritt, indem das freie Ende des Federstreifens (112) gedrückt wird.

2. Gitteranordnung nach Anspruch 1, wobei die Länge des Eingriffsabschnitts der Länge der Stiftlochpassung der Stützstange mit den Klappen entspricht.

3. Gitteranordnung nach Anspruch 1 oder 2, wobei die Lasche (11) eine Durchgangsbohrung (111) mit einem Aufnahmeschlitz (111a) aufweist, welcher mit einem Verriegelungsschlitz (111b) in Verbindung steht, wobei sich der Federstreifen (112) innerhalb des Aufnahmeschlitzes (111a) in Richtung des Verriegelungsschlitzes (111b) erstreckt.

4. Gitteranordnung nach einem der vorhergehenden Ansprüche, wobei die Dicke des Eingriffsabschnitts (33) geringer als die Dicke des Stützstabkörpers (31) ist und geringer als die Breite der Endplatten (32) ist.

5. Gitteranordnung nach einem der vorhergehenden Ansprüche, wobei die Dicke des Eingriffsabschnitts (33) geringer als die Breite des Verriegelungsschlitzes (111b) ist, welche größer als die Dicke des Stützstangekörpers (31) und geringer als die Breite der Endplatten (32) ist.

## Revendications

1. Ensemble grille de véhicule comprenant deux corps de grille (1) qui sont espacés l'un de l'autre, avec de multiples volets (2) agencés entre eux, les volets (2) étant reliés à une tige de support (3) par coopération de goupille-trou, l'ensemble grille étant **caractérisé en ce que**
- chaque corps de grille (1) est pourvu d'un ergot (11) s'étendant vers l'extérieur, l'ergot (11) étant muni d'une fente de verrouillage (111b) et d'une lame ressort (112), la lame ressort (112) s'étendant de sa base à une extrémité libre qui, à l'état libre, est située à l'entrée de la fente de verrouillage (111b), et à l'état sollicité, laisse ouverte l'entrée de la fente de verrouillage (111b) ; et
- la tige de support (3) comprend un corps de tige de support (31), une plaque d'extrémité (32) et une partie d'engagement (33) prévue à chaque extrémité du corps de tige de support (31), la plaque d'extrémité (32) étant reliée à l'extrémité du corps de tige de support (31) par l'intermédiaire de la partie d'engagement (33) qui pénètre dans la fente de verrouillage (111b) en appuyant sur l'extrémité libre de la lame ressort (112).

2. Ensemble grille selon la revendication 1, dans lequel la longueur de parcours de la partie d'engagement correspond à la longueur de parcours de la coopération goupille-trou de la tige de support aux volets.

3. Ensemble grille selon la revendication 1 ou 2, dans laquelle l'ergot (11) comprend un trou traversant (111) comprenant une fente de réception (111a) communiquant avec la fente de verrouillage (111b), la lame ressort (112) s'étendant à l'intérieur de la fente de réception (111a) vers la fente de verrouillage (111b).

4. Ensemble grille selon l'une quelconque des revendications précédentes, dans laquelle l'épaisseur de la partie d'engagement (33) est inférieure à l'épaisseur du corps de tige de support (31) et inférieure à la largeur des plaques d'extrémité (32).

5. Ensemble grille selon l'une quelconque des revendications précédentes, dans laquelle l'épaisseur de la partie d'engagement (33) est inférieure à la largeur de la fente de verrouillage (111b) qui est supérieure à l'épaisseur du corps de tige de support (31) et inférieure à la largeur des plaques d'extrémité (32).
